# FASCICULE DE BREVET EUROPEEN

(11) **EP 3 271 216 B1**
(45) Date de publication et mention de la délivrance du brevet: **06.11.2019**
(21) Numéro de dépôt: 15818012.5
(22) Date de dépôt: 11.12.2015
(51) Int. Cl.: B60R 16/02, H02G 1/08

(54) **OUTIL DE SUPPORT ET DE GUIDAGE DE CÂBLES ÉLECTRIQUES D'UN VÉHICULE**
WERKZEUG ZUM HALTEN UND FÜHREN VON ELEKTRISCHEN LEITUNGEN EINES FAHRZEUGS
TOOL FOR SUPPORTING AND GUIDING ELECTRIC CABLES OF A VEHICLE

(30) Priorité: 20.03.2015 FR 1552299
(43) Date de publication de la demande: 24.01.2018
(73) Titulaire: Renault S.A.S., 92100 Boulogne-Billancourt (FR)
(72) Inventeur: BAILLY, Thierry, 78760 Jouars Pontchartrain (FR)
(86) Numéro de dépôt international: PCT/FR2015/053455
(87) Numéro de publication internationale: WO 2016/151203

(56) Documents cités:
- EP-B1- 1 093 196
- FR-A1- 2 957 197
- JP-A- 2001 268 739
- JP-A- 2002 362 257
- JP-A- 2005 080 443

## Description

L'invention concerne le domaine de la fabrication des véhicules. En particulier, l'invention concerne un outil de support et de guidage utilisable pour faciliter le montage de câbles électriques entre l'habitacle et le compartiment moteur d'un véhicule.

Les véhicules automobiles comportent de plus en plus de câbles électriques permettant de connecter au compartiment moteur divers moyens de mesure et/ou d'affichage se trouvant dans l'habitacle de celui-ci. Un tel assemblage de câbles est généralement passé à travers une ouverture percée dans la tôle séparant le compartiment moteur de l'habitacle. Cette tôle séparant le compartiment moteur de l'habitacle est aussi appelée le tablier du véhicule.

Aussi, il est habituel que ce montage de câbles entre les deux parties du véhicule se fasse manuellement, ce qui nécessite la présence de deux opérateurs, l'un du coté habitacle du véhicule pour passer les câbles, l'autre du coté du compartiment moteur pour récupérer et dérouler ces câbles. Cette opération prend également beaucoup de temps. De plus, elle n'est pas optimale pour garantir un montage de qualité et sans risque pour l'intégrité des câbles. A cela s'ajoute le poids des câbles munis de leurs connecteurs dont le nombre ne cesse d'augmenter, ce qui peut rendre cette opération de montage pénible pour l'opérateur.

Dans ce contexte, il est nécessaire de développer des outils permettant d'apporter une assistance à l'opérateur lors d'un tel montage de câbles électriques pour rendre cette opération plus simple, plus facile et moins couteuse en temps (voir aussi JP2001268739A).

On connait de l'état de la technique le document US5887855 qui s'intéresse à la résolution de la problématique liée à la difficulté de montage de câblage entre l'habitacle et le compartiment moteur d'un véhicule. Ce document décrit un outil ayant la forme d'un long tube muni d'une poignée. Lors de son utilisation, le tube est inséré dans une ouverture dans le tablier du véhicule prévue pour le passage de câbles, puis le câble est inséré dans ce tube pour le passer d'un coté à l'autre de ce tablier.

Un tel outil n'est pas pratique et prolonge le temps nécessaire à l'opération de montage. De plus, il n'est pas adapté au montage d'un nombre élevé de câbles.

L'invention a pour objectif de proposer un outil d'aide au montage de câbles électriques entre le compartiment moteur et l'habitacle d'un véhicule qui permette de faciliter l'opération du montage par un seul opérateur tout en sécurisant les câbles lors du montage et en optimisant le temps nécessaire à cette opération.

Cet objectif ainsi que d'autres qui apparaîtront par la suite sont atteints à l'aide d'un outil de support et de guidage d'un ensemble de câbles électriques, destinés à être montés entre un habitacle et un compartiment moteur d'un véhicule en passant par une ouverture dans un tablier dudit véhicule, selon la revendication 1. Cet outil comporte une partie de support agencée de sorte à supporter ledit ensemble de câbles électriques et une partie de guidage destinée à être positionnée au moins en regard de ladite ouverture dans le tablier de telle sorte à permettre un guidage et ainsi faciliter le passage dudit ensemble de câbles électriques par l'ouverture dans le tablier du véhicule.

Ainsi, l'outil selon l'invention comporte une partie de support qui permet de supporter l'ensemble de câbles électriques. Il n'est donc plus nécessaire qu'un opérateur supporte lui-même le poids des câbles électriques avec leurs connecteurs. L'outil comprend également une partie de guidage qui facilite le passage des câbles à travers l'ouverture dans le tablier du véhicule. En plus de guider et faciliter le passage des câbles par l'ouverture dans le tablier du véhicule, l'utilisation d'un tel outil permet de réduire les manipulations des câbles et ainsi leur évite d'être endommagés. L'utilisation d'un tel outil permet aussi de faciliter l'opération du montage par un seul opérateur, puisqu'il suffit à l'opérateur de positionner l'ensemble des câbles électriques dans cet outil, puis le positionner dans l'habitacle du véhicule de telle sorte qu'une extrémité des câbles dépasse par l'ouverture dans le tablier du véhicule et enfin de passer du coté moteur pour tirer le câble déjà positionné. Cette façon de faire permet aussi de réduire le temps nécessaire à cette opération.

Selon l'invention, la partie de support dudit outil de support et de guidage a la forme d'un bac comportant des parois latérales et la partie de guidage a une largeur qui va en diminuant, l'extrémité de ladite partie de guidage ne comportant pas de parois latérales et ayant une largeur inférieure ou égale à la largeur de l'ouverture dans le tablier du véhicule. Ainsi, le fait que la partie de guidage a une largeur qui va en diminuant permet de mieux positionner les câbles de telle sorte à permettre un guidage amélioré.

Selon une réalisation de l'invention, la partie de guidage comporte des parois latérales souples fixées aux parois latérales de la partie de support et ayant une forme permettant de serrer une extrémité de l'ensemble de câbles électriques. Le fait d'avoir de telles parois souples et agencées pour serrer l'extrémité des câbles électriques permet d'éviter le glissement en arrière de la partie de ces câbles positionnée à travers l'ouverture dans le tablier du véhicule. De plus, la souplesse de ces parois permet de tirer les câbles vers le compartiment moteur sans difficultés pour l'opérateur et sans trop de frottements.

Selon une réalisation de l'invention, la partie de guidage comporte des parois latérales rigides montées pivotantes sur les parois latérales de la partie de support. Dans ce cas, ces parois sont fermées mécaniquement de telle sorte à serrer l'extrémité des câbles lors du positionnement de celle-ci à travers l'ouverture dans le tablier de véhicule. Par la suite, ces parois sont écartées par l'opérateur pour faciliter le tirage des câbles vers le compartiment moteur.

Selon une réalisation de l'invention, le mouvement desdites parois latérales de la partie de guidage est contrôlé par un mécanisme intégré audit outil de support et de guidage. Dans ce cas, il n'est plus nécessaire de serrer et écarter les parois manuellement, mais il suffit d'activer le mécanisme dans le sens d'ouverture ou de fermeture des dites parois. Ainsi, on simplifie l'opération de montage.

Selon une autre réalisation de l'invention, les parois latérales sont maintenues serrées et/ou desserrées à l'aide d'au moins un ressort. Le fait d'utiliser un ou plusieurs ressort(s) permet de soutenir les parois dans la position de fermeture et/ou d'ouverture et de donner une certaine souplesse à ces parois. En outre, l'utilisation de ressorts peut permettre de s'affranchir de l'utilisation d'un mécanisme de contrôle.

Selon une réalisation de l'invention, les parois latérales de la partie de guidage sont courbées à leurs extrémités. Une telle courbure permet d'avoir un meilleur serrage des câbles, puisque la courbure est adaptée à la forme d'un ensemble de câbles électriques, par exemple en forme d'un toron.

Selon une autre réalisation de l'invention, la partie de guidage a une forme sensiblement cylindrique avec un dessus partiellement ouvert. Le fait d'avoir un outil de cette forme permet d'éviter toute manipulation des parois lors du passage des câbles. Aussi, cette forme cylindrique de la partie de guidage s'adapte mieux à la forme de l'ouverture dans le tablier du véhicule qui est généralement circulaire.

Selon une application, l'outil de support et de guidage comporte un moyen permettant une fixation à la colonne de direction. Le fait de prévoir un tel moyen de fixation permet un positionnement aisé et sécurisé de l'outil.

Selon une autre application, l'outil de support et de guidage est solidaire d'un moyen de montage d'une planche de bord sur une caisse du véhicule et positionné par rapport audit moyen de montage d'une planche de bord de telle sorte que l'extrémité de la partie de guidage soit au moins en regard de l'ouverture dans le tablier du véhicule lors de l'accostage de ladite planche de bord. Le fait d'intégrer l'outil dans un moyen de montage de la planche de bord permet d'améliorer grandement l'opération de montage des câbles et de l'inclure avec l'opération de montage de la planche de bord. De ce fait, l'operateur n'a pas à transporter lui-même l'outil. Il n'a qu'à positionner les câbles dans l'outil à l'extérieur du véhicule et de tirer le câble du coté compartiment moteur suite au montage de la planche de bord. Ceci permet également de gagner du temps puisque deux opérations sont réalisées simultanément par le même opérateur avec le moyen de montage de la planche de bord.

Selon une variante, l'outil de support et de guidage selon l'invention est fabriqué à partir d'un matériau ayant un faible coefficient de frottement.

D'autres caractéristiques et avantages apparaitront plus clairement à la lecture de la description suivante, de modes de réalisation préférés, donnés à titre d'exemples non limitatifs, en relation avec les dessins annexés, parmi lesquels :
- la figure 1 est une vue d'un mode de réalisation de l'invention dans lequel la partie de guidage comporte deux parois latérales souples en forme d'un « S » ;
- la figure 2 est une vue d'une variante du mode de réalisation de la figure 1 dans laquelle les parois latérales souples en forme de « S » sont courbées à leurs extrémités, un ensemble de câbles étant positionné dans l'outil ;
- la figure 3 est une vue d'une deuxième variante du mode de réalisation de la figure 1 dans laquelle les parois latérales sont rigides avec des à extrémités courbées, montées pivotantes ;

- la figure 4 est une vue d'un deuxième mode de réalisation de l'invention dans lequel les parties de support et de guidage forment un seul corps dans lequel la partie de guidage est sensiblement cylindrique avec un dessus partiellement ouvert;
- la figure 5 est une vue illustrant le principe d'utilisation d'un outil selon l'invention.
- la figure 6 est une vue illustrant une variante l'outil de la figure 5 comprenant un moyen de fixation à la colonne de direction ;
- la figure 7 est une vue illustrant une autre variante de l'outil de la figure 5 dans laquelle l'outil est solidaire d'un moyen de montage d'une planche de bord.

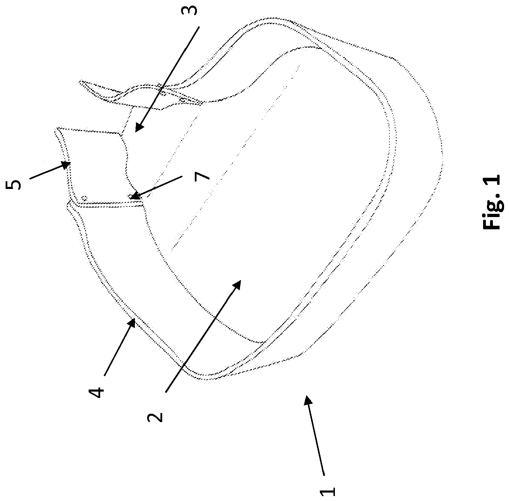

Un mode de réalisation d'un outil 1 de support et de guidage selon l'invention est représenté dans la figure 1. Cet outil 1 comporte une partie de support 2 et une partie de guidage 3. La partie de support 2 a une forme d'un bac sensiblement rectangulaire et entourée par une paroi latérale 4. Néanmoins, cette partie de support 2 peut avoir toute autre forme, par exemple circulaire ou ovale, mais sa taille doit tenir compte de l'environnement d'utilisation. Aussi, cette partie est, de préférence, fabriquée à partir d'un matériau rigide pour assurer un bon support d'un nombre important de câbles électriques munis de leurs connecteurs.

La partie de guidage 3 a un fond commun avec la partie de support et la largeur de cette partie de guidage va en diminuant jusqu'à son extrémité. Cette extrémité est ouverte pour permettre le passage de l'ensemble des câbles à travers l'ouverture dans le tablier du véhicule. Cette partie de guidage 3 comporte deux parois latérales souples 5 fixées par des moyens de fixation 7 aux deux extrémités de la paroi 4 de la partie de support 2. Les deux parois souples 5 sont sensiblement en forme d'un « S », ce qui leur procure un certain effet ressort en fermeture et en ouverture. Grâce à cet effet ressort, ces deux parois latérales 5 serrent les câbles électriques pour faciliter leur engagement dans l'ouverture dans le tablier. Ces parois servent aussi à éviter un retour en arrière de la partie des câbles électriques déjà engagés dans l'ouverture dans le tablier du véhicule. Cette effet ressort permet aussi de tirer les câbles vers le compartiment moteur sans trop de frottement réduisant ainsi le risque d'endommager les câbles ou leurs connecteurs. Les parois peuvent aussi être amovibles, de type rigide ou semi rigides montées sur charnières.

Les parois latérales 5 de la partie de guidage sont de préférence courbées à leurs extrémités. Cette courbure permet d'avoir un meilleur serrage des câbles, car la courbure est adaptée à la forme d'un ensemble de câbles électriques.

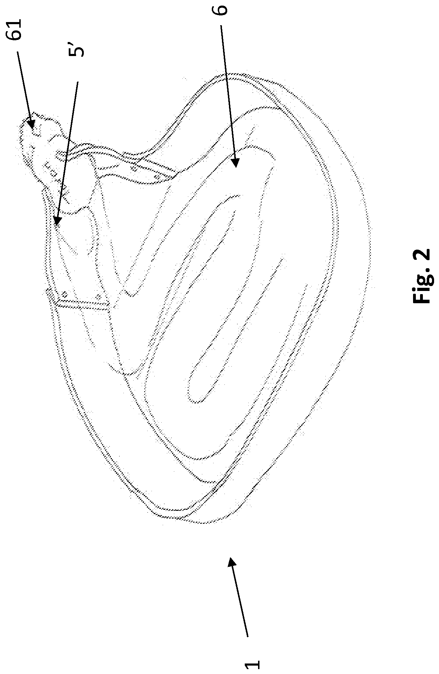

La figure 2 montre un outil de support et de guidage 1 selon l'invention dans lequel est positionné un ensemble de câbles électriques 6 avec leurs connecteurs. Cet ensemble de câbles électriques 6, par exemple en forme d'un toron, est de préférence conditionné dans une chaussette en plastique ou en tissu pour faciliter son passage par l'ouverture dans le tablier du véhicule. Cette chaussette sert à protéger les câbles contre les frottements, mais elle peut aussi permettre de contraindre un ensemble important de câbles pour faciliter leur passage à travers l'ouverture dans le tablier du véhicule.

Dans la figure 2 une extrémité 61 de l'ensemble des câbles électriques 6 dépasse de l'outil, les parois latérales 5' de la partie de guidage ayant des extrémités courbées serrent ces câbles électriques. Ce serrage permet d'assurer un bon maintien de l'extrémité 61, celle-ci étant destinée à être engagée dans l'ouverture dans le tablier du véhicule à partir de l'habitacle.

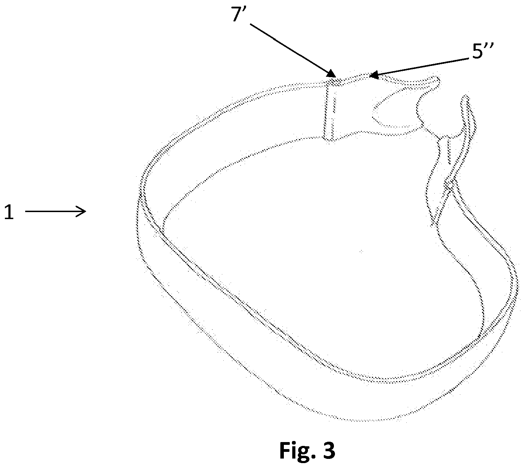

La figure 3 représente une variante de l'outil de support et de guidage 1 dans laquelle la partie de guidage comporte deux parois latérales rigides 5" montées pivotantes sur les parois latérales de la partie de support par un moyen de fixation 7'. La fermeture et l'ouverture de telles parois peuvent se faire manuellement ou contrôlées par un mécanisme intégré à l'outil de support et de guidage. Dans ce dernier cas, il n'est plus nécessaire de serrer et écarter les parois manuellement, mais il suffit d'activer un mécanisme dans le sens d'ouverture ou de fermeture des dites parois. On peut prévoir un mécanisme embarqué de type pneumatique ou électrique.

On peut aussi prévoir un ou plusieurs ressorts pour maintenir ces parois latérales en position de fermeture ou d'ouverture.

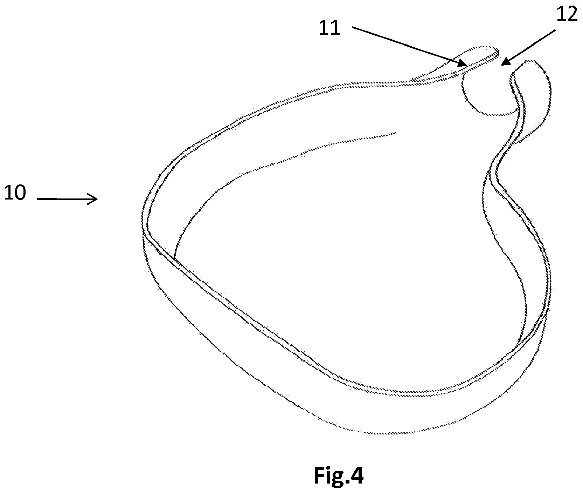

La figure 4 représente un autre mode de réalisation de l'invention dans lequel les parties de support et de guidage forment un seul corps 10 dans lequel la partie de guidage 11 est sensiblement cylindrique avec un dessus partiellement ouvert 12.

Le dessus partiellement ouvert 12 permet un retrait aisé de l'outil 10 lorsque l'ensemble des câbles est en place. Sans ce dessus partiellement ouvert 12, le retrait de l'outil serait difficile, car les câbles sont souvent accompagnés d'un bouchon d'étanchéité destiné à refermer l'ouverture dans le tablier du véhicule lorsque les câbles sont en place.

Il est préférable que cet outil 10 de support et de guidage soit fabriqué à partir d'un matériau souple permettant la déformation de la partie de guidage 11 pour l'adapter à l'ouverture dans le tablier du véhicule. Un tel matériau peut être par exemple le polypropylène, le polyéthylène ou un polyamide.

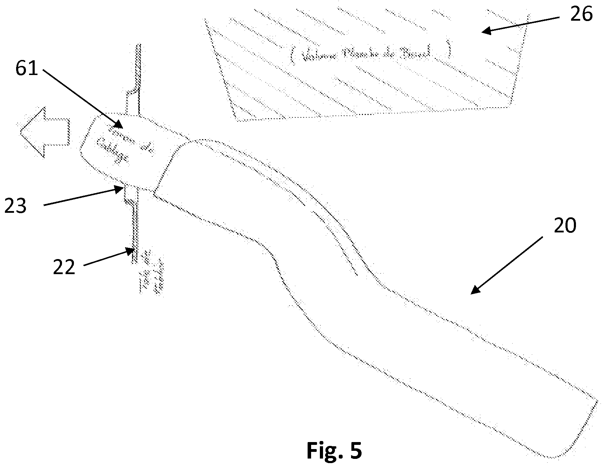

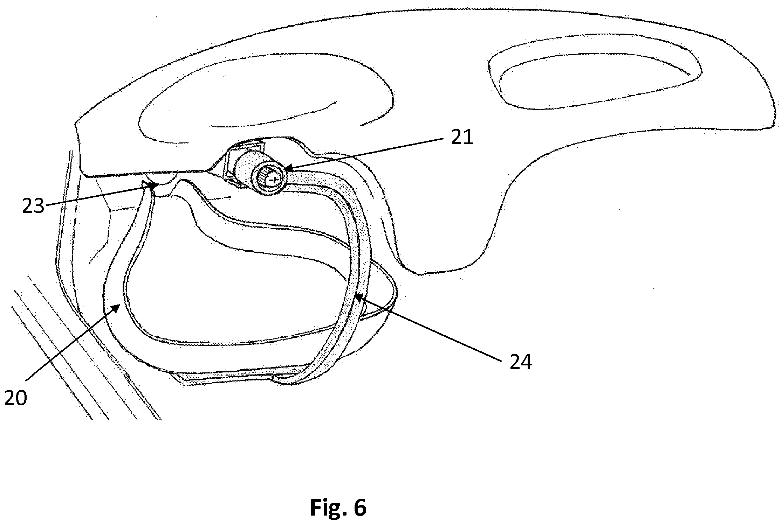

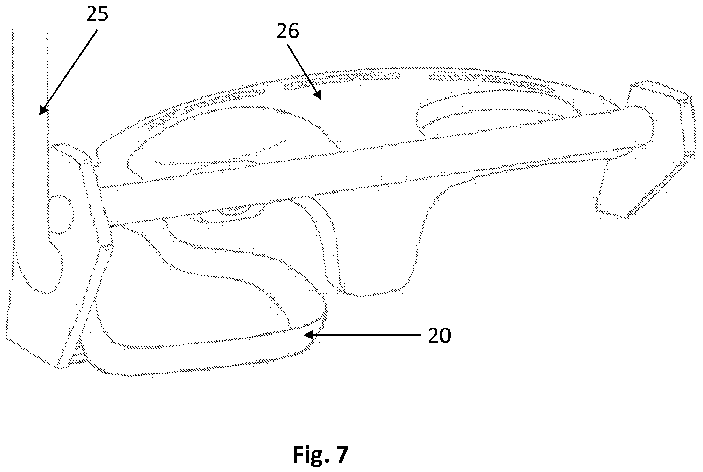

La figure 5 illustre le principe d'utilisation d'un outil 20 selon un autre mode de réalisation de l'invention. Ce principe d'utilisation s'applique également aux modes de réalisation déjà présentés. L'outil 20 de support et de guidage comporte une partie de support et une partie de guidage qui forment un corps unique entouré par une seule paroi latérale, sauf à l'extrémité de la partie de guidage. Ce même outil 20 est également illustré dans les figures 6 et 7. L'outil 20 est positionné manuellement avec une certaine inclinaison de telle sorte que l'extrémité de la partie de guidage soit en regard de l'ouverture 23 dans le tablier 22 du véhicule. Une partie 61 des câbles électriques, enveloppés dans une chaussette en tissu ou en plastique, dépassant dudit outil est ainsi engagée dans l'ouverture. L'extrémité de l'outil se trouvant dans la partie de support est posée sur le sol du véhicule. Ainsi, il ne reste à l'opérateur qu'à venir du coté du compartiment moteur pour tirer les câbles vers le compartiment moteur. Notons que l'inclinaison de l'outil de support 20 facilite également le tirage des câbles. L'outil 20, sans aménagement, notamment sans pince en extrémité, est différent de l'outil 10 dans la zone de guidage du câble.

Le mode de réalisation de la figure 6 correspond au mode de réalisation de la figure 5, sauf en ce que l'outil 20 est muni d'un moyen 24 de fixation à la colonne de direction 21. Un avantage d'avoir ce moyen 24 de fixation à la colonne de direction 21 est que la position de l'outil est optimale et reproductible d'un véhicule à l'autre. De plus, il n'y a pas de risque que l'outil bouge lorsque l'opérateur déroule les câbles du coté du compartiment moteur.

Le mode de réalisation de la figure 7 correspond également au mode de réalisation de la figure 5, sauf en ce que l'outil 20 est solidaire d'un moyen 25 de montage de planche de bord 26. Cet outil 20 est agencé de telle sorte que lors de l'accostage de la planche de bord l'extrémité de la partie de guidage soit en regard de l'ouverture dans le tablier du véhicule. De cette façon, une partie de l'opération de montage des câbles électrique est intégré avec l'opération de montage de la planche de bord, ce qui permet de gagner du temps lors du montage. Cette association a aussi pour avantage que l'opérateur n'a pas à supporter le poids de l'outil avec le câblage, car l'outil est déjà positionné sur le moyen de montage de la planche de bord.

L'invention ne se limite pas aux modes de réalisation décrits. On peut prévoir différentes variantes sans pour autant sortir du cadre de l'invention.

## Revendications

1. Outil (1, 10, 20) de support et de guidage d'un ensemble de câbles électriques (6), destinés à être montés entre un habitacle et un compartiment moteur d'un véhicule en passant par une ouverture (23) dans un tablier (22) dudit véhicule, **caractérisé en ce que** ledit outil (1, 10, 20) comporte une partie de support (2) qui a la forme d'un bac comportant des parois latérales (4) de sorte à supporter ledit ensemble de câbles électriques (6) et une partie de guidage (3) ayant une largeur qui va en diminuant, l'extrémité de ladite partie de guidage ne comportant pas de parois latérales et ayant une largeur inférieure ou égale à la largeur de l'ouverture dans le tablier du véhicule, destinée à être positionnée au moins en regard de ladite ouverture (23) dans le tablier (22) de telle sorte à permettre un guidage et ainsi faciliter le passage dudit ensemble de câbles électriques par l'ouverture (23) dans le tablier (22) du véhicule.

2. Outil (1) de support et de guidage selon la revendication 1, **caractérisé en ce que** ladite partie de guidage (3) comporte des parois latérales souples (5) fixées aux parois latérales (4) de la partie de support et ayant une forme permettant de serrer une extrémité de l'ensemble de câbles électriques.

3. Outil (1) de support et de guidage selon la revendication 1, **caractérisé en ce que** ladite partie de guidage (3) comporte des parois latérales rigides (5") montées pivotantes sur les parois latérales (4) de la partie de support (2).

4. Outil (1) de support et de guidage selon la revendication 3, **caractérisé en ce que** le mouvement desdites parois latérales (5") de la partie de guidage est contrôlé par un mécanisme intégré audit outil de support et de guidage.

5. Outil (1) de support et de guidage selon la revendication 3, **caractérisé en ce que** lesdites parois latérales de la partie de guidage sont maintenues serrées et/ou desserrées à l'aide d'au moins un ressort.

6. Outil (1) de support et de guidage selon l'une des revendications 2 à 5, **caractérisé en ce que** les lesdites parois latérales (5, 5', 5") de la partie de guidage sont courbées à leurs extrémités.

7. Outil (10) de support et de guidage selon la revendication 1, **caractérisé en ce que** la partie de guidage (11) a une forme sensiblement cylindrique avec un dessus (12) partiellement ouvert.

8. Outil (20) de support et de guidage selon l'une des revendications précédentes **caractérisé en ce qu'**il comporte un moyen (24) permettant une fixation à une colonne de direction (21).

9. Outil (20) de support et de guidage selon l'une des revendications 1 à 7, **caractérisé en ce qu'**il est solidaire d'un moyen (25) de montage d'une planche de bord (26) sur une caisse du véhicule et positionné par rapport audit moyen de montage d'une planche de bord de telle sorte que l'extrémité de la partie de guidage soit au moins en regard de l'ouverture (23) dans le tablier (22) du véhicule lors de l'accostage de ladite planche de bord (26).

## Patentansprüche

1. Werkzeug (1, 10, 20) zum Halten und Führen einer Anordnung von elektrischen Leitungen (6), die dazu bestimmt sind, zwischen einem Innenraum und einem Motorraum eines Fahrzeugs angebracht zu werden und dabei eine Öffnung (23) in einer Spritzwand (22) des Fahrzeugs zu durchqueren, **dadurch gekennzeichnet, dass** das Werkzeug (1, 10, 20) einen Halteteil (2) aufweist, welcher die Form eines Behälters hat, der Seitenwände (4) aufweist, um die Anordnung von elektrischen Leitungen (6) zu halten, und einen Führungsteil (3), der eine abnehmende Breite hat, wobei das Ende des Führungsteils keine Seitenwände aufweist und eine Breite hat, die kleiner oder gleich der Breite der Öffnung in der Spritzwand des Fahrzeugs ist, und der dazu bestimmt ist, wenigstens gegenüber der Öffnung (23) in der Spritzwand (22) positioniert zu werden, um so eine Führung zu ermöglichen und somit die Durchführung der Anordnung von elektrischen Leitungen durch die Öffnung (23) in der Spritzwand (22) des Fahrzeugs zu erleichtern.

2. Werkzeug (1) zum Halten und Führen nach Anspruch 1, **dadurch gekennzeichnet, dass** der Führungsteil (3) flexible Seitenwände (5) aufweist, die an den Seitenwänden (4) des Halteteils befestigt sind und eine Form aufweisen, die es ermöglicht, ein Ende der Anordnung von elektrischen Leitungen festzuklemmen.

3. Werkzeug (1) zum Halten und Führen nach Anspruch 1, **dadurch gekennzeichnet, dass** der Führungsteil (3) starre Seitenwände (5") aufweist, die schwenkbar an den Seitenwänden (4) des Halteteils (2) angebracht sind.

4. Werkzeug (1) zum Halten und Führen nach Anspruch 3, **dadurch gekennzeichnet, dass** die Bewegung der Seitenwände (5'') des Führungsteils von einem Mechanismus gesteuert wird, der in das Werkzeug zum Halten und Führen integriert ist.

5. Werkzeug (1) zum Halten und Führen nach Anspruch 3, **dadurch gekennzeichnet, dass** die Seitenwände des Führungsteils mithilfe wenigstens einer Feder festgeklemmt und/oder gelöst gehalten werden.

6. Werkzeug (1) zum Halten und Führen nach einem der Ansprüche 2 bis 5, **dadurch gekennzeichnet, dass** die Seitenwände (5, 5', 5") des Führungsteils an ihren Enden gekrümmt sind.

7. Werkzeug (10) zum Halten und Führen nach Anspruch 1, **dadurch gekennzeichnet, dass** der Führungsteil (11) eine im Wesentlichen zylindrische Form mit einem teilweise offenen Oberteil (12) hat.

8. Werkzeug (20) zum Halten und Führen nach einem der vorhergehenden Ansprüche, **dadurch gekennzeichnet, dass** es ein Mittel (24) aufweist, das eine Befestigung an einer Lenksäule (21) ermöglicht.

9. Werkzeug (20) zum Halten und Führen nach einem der Ansprüche 1 bis 7, **dadurch gekennzeichnet, dass** es mit einem Mittel (25) zur Anbringung eines Armaturenbretts (26) an einer Karosserie des Fahrzeugs fest verbunden ist und in Bezug auf das Mittel zur Anbringung eines Armaturenbretts derart positioniert ist, dass sich das Ende des Führungsteils beim Anfügen des Armaturenbretts (26) wenigstens gegenüber der Öffnung (23) in der Spritzwand (22) des Fahrzeugs befindet.

## Claims

1. Tool (1, 10, 20) for supporting and guiding a set of electrical cables (6) that are intended to be mounted between a passenger compartment and an engine compartment of a vehicle by passing through an opening (23) in a firewall (22) of said vehicle, **characterized in that** said tool (1, 10, 20) includes a supporting portion (2) which takes the form of a tray including lateral walls (4) so as to support said set of electrical cables (6) and a guiding portion (3) having a width that decreases, the end of said guiding portion not including lateral walls and having a width less than or equal to the width of the opening in the firewall of the vehicle intended to be positioned at least opposite said opening (23) in the firewall (22) so as to allow guiding and thus to facilitate the passage of said set of electrical cables through the opening (23) in the firewall (22) of the vehicle.

2. Supporting and guiding tool (1) according to Claim 1, **characterized in that** said guiding portion (3) includes flexible lateral walls (5) fixed to the lateral walls (4) of the supporting portion and having a shape allowing clamping of one end of the set of electrical cables.

3. Supporting and guiding tool (1) according to Claim 1, **characterized in that** said guiding portion (3) includes rigid lateral walls (5") pivotably mounted on the lateral walls (4) of the supporting portion (2).

4. Supporting and guiding tool (1) according to Claim 3, **characterized in that** the movement of said lateral walls (5") of the guiding portion is controlled by a mechanism integrated into said supporting and guiding tool.

5. Supporting and guiding tool (1) according to Claim 3, **characterized in that** said lateral walls of the guiding portion are held clamped and/or unclamped with the aid of at least one spring.

6. Supporting and guiding tool (1) according to any one of Claims 2 to 5, **characterized in that** said lateral walls (5, 5', 5") of the guiding portion are curved at their ends.

7. Supporting and guiding tool (10) according to Claim 1, **characterized in that** the guiding portion (11) has a substantially cylindrical shape with a partially open top (12).

8. Supporting and guiding tool (20) according to any one of the preceding claims, **characterized in that** it includes means (24) allowing fixing to a steering column (21).

9. Supporting and guiding tool (20) according to any one of Claims 1 to 7, **characterized in that** it is secured to means (25) for mounting a dashboard (26) on a body of the vehicle and positioned relative to said dashboard mounting means so that the end of the guiding portion is at least opposite the opening (23) in the firewall (22) of the vehicle when said dashboard (26) is in position.
